# EUROPEAN PATENT SPECIFICATION

(11) **EP 3 395 594 B1**
(45) Date of publication and mention of the grant of the patent: **04.05.2022**
(21) Application number: 18162411.5
(22) Date of filing: 16.03.2018
(51) Int. Cl.: B60J 10/32, B60J 10/265, B60J 10/75

(54) **SEAL STRUCTURE OF EXTERIOR BELTLINE MOLDING FOR AUTOMOBILE DOOR AND AUTOMOBILE**
DICHTUNGSSTRUKTUR EINES ÄUSSEREN GÜRTELLINIENFORMTEILS FÜR EINE KRAFTFAHRZEUGTÜR UND KRAFTFAHRZEUG
STRUCTURE DE JOINT POUR MOULAGE DE CEINTURE DE CAISSE EXTÉRIEURE DE PORTIÈRE DE VÉHICULE AUTOMOBILE ET VÉHICULE AUTOMOBILE

(30) Priority: 24.04.2017 CN 201710271168
(43) Date of publication of application: 31.10.2018
(73) Proprietor: PSA Automobiles SA, 78300 Poissy (FR)
(72) Inventor: ZHOU, YING, Shanghai Caohejing Hi-Tech Park (CN); ZHANG, YIN, Shanghai Caohejing Hi-Tech Park (CN); GU, JIAN, Shanghai Caohejing Hi-Tech Park (CN); ZHU, YI, Shanghai Caohejing Hi-Tech Park (CN); XI, JIA HAO, Shanghai Caohejing Hi-Tech Park (CN)

(56) References cited:
- WO-A1-2004/056598
- CN-A- 101 856 966
- DE-A1- 19 736 899
- JP-A- 2016 074 376
- US-A- 4 894 968
- US-A1- 2004 200 151
- US-A1- 2005 235 569
- US-A1- 2006 053 614
- US-A1- 2011 219 700

## Description

### FIELD OF TECHNOLOGY

The present disclosure relates to the technical field of automobile manufacturing, in particular to a seal structure of an exterior beltline molding for an automobile door and an automobile, in particular to a seal structure of an exterior beltline molding for an automobile door, which is simple in structure and easy to assemble and capable of effectively improving the sealing effect and appearance quality, and an automobile.

### BACKGROUND

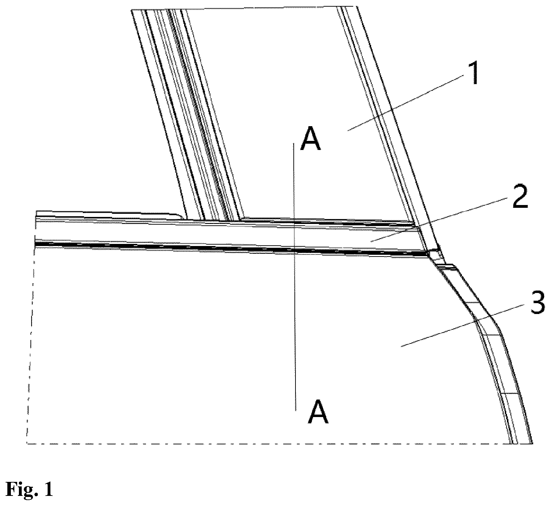

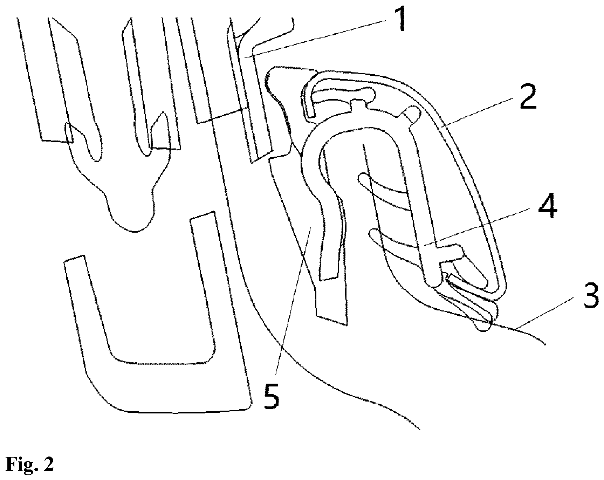

The exterior beltline molding for an automobile door is one of important components of the door for the automobile and has decorative, sealing and door-glass-guiding functions. The existing exterior beltline molding for the automobile door has the structure as shown in Figures 1 and 2 and mainly includes an extrusion support 4 and a TPE (Thermoplastic Elastomer) injection molded block 5, an weather strip 2 is engaged with the outer surface of the extrusion support 4 and a door outer panel 3 which is in contact connection with the extrusion support 4. By the structure above, there are such disadvantages as poor fixing effect, unstable connection, uneasiness in control and effect on sealing performance and appearance quality of the door; meanwhile, since the TPE injection molded block 5 is made of a TPE material, which is susceptible to the temperature to be deformed, steps and gaps are easily formed between the exterior beltline molding and a B pillar trim 1 especially in summer. In addition, the exterior beltline molding is disposed on the automobile door and is in fit connection with the B pillar trim 1 to have sealing and decorative effects on a body. The size of the B pillar trim 1 is very close to the installation clearance required by the exterior beltline molding, which causes the assembling of the exterior beltline molding difficult, time-consuming and low efficiency.

The document WO2004056598 describes a sealing arrangement, especially for sealing window panes of a motor vehicle, comprising a weatherstrip that is provided with a sealing section and a fastening section, and an exterior trim which is connected to the said fastening section.

The document US2004200151 describes a weatherstrip adapted to be secured on a flange of a vehicle.

The document US4894968 describes a belt weather strip with the weather stripping adapted to be secured on the flange of a vehicle.

Document JP2016074376 A discloses a beltline molding for a vehicle.

### SUMMARY

The first aspect of the present disclosure is to provide a seal structure of an exterior beltline molding for an automobile door, which is simple in structure and easy to assemble and capable of effectively improving the sealing effect and appearance quality so as to solve such problems as unstable connection, uneasiness in control and poor sealing performance and appearance quality of the door due to the contact connection between the existing exterior beltline molding and a door outer panel.

The second aspect of the present disclosure is to provide an automobile, which is simple in structure and easy to assemble and capable of effectively improving the sealing effect and appearance quality so as to solve such problems as unstable connection, uneasiness in control and effect on sealing effect and appearance quality of the door due to a seal structure of the exterior beltline molding used in the existing automobile.

According to the first aspect of the invention, the embodiment provides a seal structure of an exterior beltline molding for an automobile door, disposed on a door outer panel and in fit with a window glass and a B pillar trim so as to seal the gap between the window glass and door outer panel, comprising an exterior beltline molding body and an weather strip engaged with the outer surface of the exterior beltline molding body, wherein the exterior beltline molding body comprises a U-shaped skeleton and an engaging block disposed at the end of the U-shaped skeleton, the engaging block is provided with an inversed hook portion and the door outer panel is configured with a waist hole for embedding the inversed hook portion.

A filler material layer is arranged between the B pillar trim and the exterior beltline molding body. The exterior beltline molding body further comprises a first sealing lip connected with the U-shaped skeleton and the first sealing lip is in fit connection with the B pillar trim.

The filler material layer is arranged within an accommodating space formed by the B pillar trim, first sealing lip, U-shaped skeleton and engaging block.

According to the invention, the U-shaped skeleton is provided with a first extended portion extending towards the first sealing lip and a gap is formed between the first extended portion and first sealing lip for allowing the weather strip to be embedded.

In one of the embodiments, the exterior beltline molding body further comprises a second sealing lip connected with the U-shaped skeleton and the second sealing lip is in fit connection with the door outer panel.

In one of the embodiments, the U-shaped skeleton is provided with a second extended portion extending towards the second sealing lip and a gap is formed between the second extended portion and second sealing lip for allowing the weather strip to be embedded.

In one of the embodiments, the U-shaped skeleton, engaging block, first sealing lip, first extended portion, second sealing lip and second extended portion are integrally formed together.

In one of the embodiments, the filler material layer is made of an EPDM (Ethylene Propylene Diene Monomer) foam material.

In one of the embodiments, both U-shaped skeleton and engaging block are made of a PP (Polypropylene) material.

According to the second aspect, an automobile comprising the seal structure of the exterior beltline molding of the first aspect is provided.

According to the present disclosure, by providing a seal structure of an exterior beltline molding according to the first aspect, the accuracy for positioning the exterior beltline molding body is increased and meanwhile, the connection reliability between the exterior beltline molding body and door outer panel is also achieved, thereby effectively improving the sealing effect and appearance quality of the door; the seal structure of the exterior beltline molding for the automobile provided by the present disclosure has such advantages as simple structure, convenient manufacture and strong practicability and is conducive to standardization production and promotion

### BRIEF DESCRIPTION OF THE DRAWINGS

Fig. 1 is a schematic diagram of the connection structure of a B pillar trim, an weather strip and a door outer panel according to the prior art;
Fig. 2 is a cross-sectional view of the connection structure taken along the A-A line in Fig. 1;
Fig. 3 is a schematic diagram of the connection structure of a B pillar trim, an weather strip and a door outer panel according to an embodiment of a seal structure of an exterior beltline molding for an automobile door of the present disclosure; and
Fig. 4 is a cross-sectional view of the connection structure taken along the B-B line in Fig. 3.

### Description of Reference Signs

| | | | |
|---|---|---|---|
| 1 | B pillar trim | 2 | weather strip |
| 3 | door outer panel | 4 | extrusion support |
| 5 | TPE injection molded block | 6 | U-shaped skeleton |
| 7 | engaging block | 8 | first sealing lip |
| 9 | first extended portion | 10 | second sealing lip |
| 11 | second extended portion | 12 | filler material layer |

### DESCRIPTION OF THE EMBODIMENTS

Hereinafter, to make the objectives, solutions and advantages of the embodiments of the present disclosure more comprehensible, the solutions in the embodiments of the present disclosure are clearly and completely described in conjunction with accompanying drawings. Apparently, the described embodiments are a part but not all of the embodiments of the present disclosure. All other embodiments obtained by a person of ordinary skill in the art based on the embodiments above with creative efforts shall fall within the protection scope of the present disclosure.

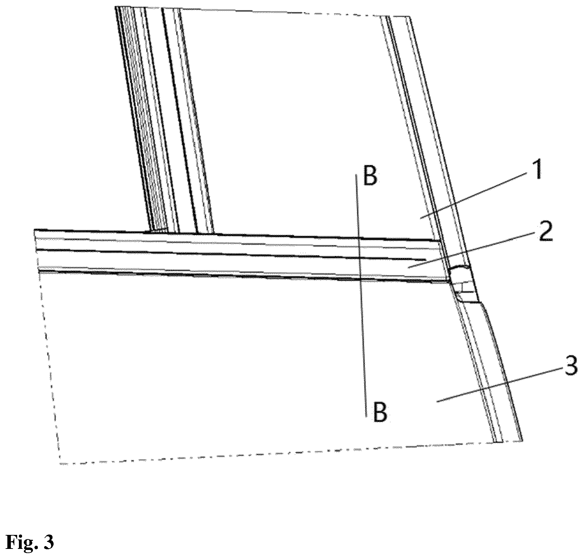

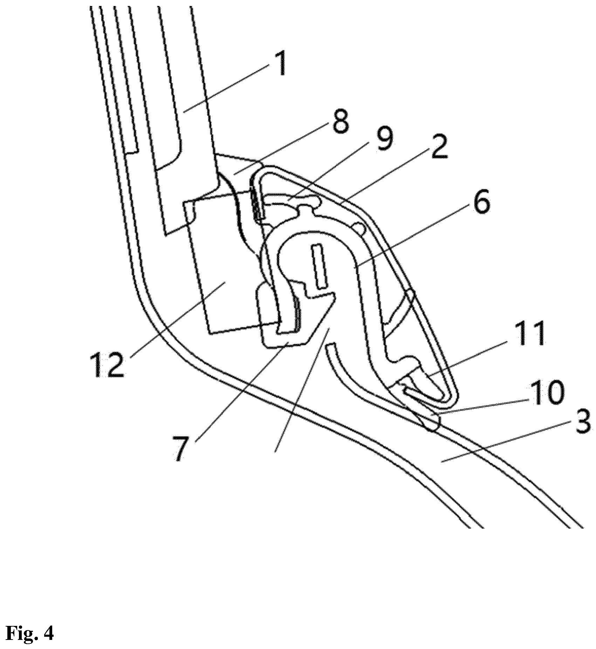

As shown in Figures 3 to 4, one of the embodiments provides a seal structure of an exterior beltline molding for an automobile door, disposed on a door outer panel 3 and in fit with a window glass and a B pillar trim 1 so as to seal the gap between the window glass and door outer panel 3. Specifically, the seal structure of the exterior beltline molding for the automobile comprises an exterior beltline molding body and an weather strip 2 engaged with the outer surface of the exterior beltline molding body so as to improve the appearance quality of the door while the sealing effect of the door is achieved; the exterior beltline molding body comprises a U-shaped skeleton 6 and an engaging block 7 disposed at the end of the U-shaped skeleton, the engaging block 7 is provided with an inversed hook portion and the door outer panel 3 is configured with a waist hole for embedding the inversed hook portion, the waist hole is formed in a platinum frame of the door outer panel 3 and is in fit connection with the inversed hook portion of the engaging block 7 at the end of the U-shaped skeleton so as to install the exterior beltline molding body on the door outer panel 3 fixedly. By adopting the mode for engaging the waist hole and inversed hook portion, such advantages as simple structure and convenient assemble can be obtained, the accuracy for positioning the exterior beltline molding body is increased and meanwhile, the connection reliability between the exterior beltline molding body and door outer panel 3 is also achieved.

In one of the embodiments, by cladding the end of the U-shaped skeleton 6 with the engaging block 7, on one hand, both structural stability and reliability of the whole exterior beltline molding body are improved so as to enhance the fixing connection effect; on the other hand, such advantages as simple structure and convenient assemble can be realized which is conductive to reducing production costs.

Further, a filler material layer 12 is arranged between the B pillar trim 1 and the exterior beltline molding body in order to reduce the generated by the wind resistance and improve the driving experience. The filler material can be rockwool or glass fiber or a cushion or sound-proof cotton, etc., and a corresponding suitable filler material can be selected according to the actual implementation conditions.

Furthermore, the exterior beltline molding body further comprises a first sealing lip 8 connected with the U-shaped skeleton 6 and the first sealing lip 8 is disposed at the end close to the engaging block 7 and located above the engaging block 7. The first sealing lip 8 is in fit connection with the B pillar trim 1 so as to seal the gap between the window glass and door outer panel 3. In present embodiment, the filler material layer 12 is arranged within an accommodating space formed by the B pillar trim 1, first sealing lip 8, U-shaped skeleton 6 and engaging block 7.

Furthermore, the U-shaped skeleton 6 is provided with a first extended portion 9 extending towards the first sealing lip 8 and a gap is formed between the first extended portion 9 and first sealing lip 8 for allowing the weather strip 2 to be embedded. In present embodiment, the cross-sectional shape of the first extended portion 9 is a line-shaped member and a gap for allowing the weather strip 2 to be embedded is formed between the first extended portion 9 and the outer surface of the first sealing lip 8. In order to improve the fixing effect of the weather strip 2, a limiting portion of which the shape is matched with that of the weather strip 2 is arranged at the connection of the first sealing lip 8 with the weather strip 2 so as to prevent the displacement generated by the weather strip 2, thereby increasing the structural stability of the weather strip 2.

Furthermore, the exterior beltline molding body further comprises a second sealing lip 10 connected with the U-shaped skeleton 6. The second sealing lip 10 is disposed at the opposite end to the engaging block 7 of the U-shaped skeleton 6. The second sealing lip 10 is in fit connection with the door outer panel 3 and is closely attached to the door outer panel 3 after being assembled to further improve the connection reliability of the exterior beltline molding body and the door outer panel 3.

Furthermore, the U-shaped skeleton 6 is provided with a second extended portion 11 extending towards the second sealing lip 10 and a gap is formed between the second extended portion 11 and second sealing lip 10 for allowing the weather strip 2 to be embedded. In present embodiment, the cross-sectional shape of the second extended portion 11 is a line-shaped member; the second extended portion 11 is disposed towards the second sealing lip 10 and a gap for allowing the weather strip 2 to be embedded is formed between the second extended portion 11 and the outer surface of the second sealing lip 10. In order to improve the fixing effect of the weather strip 2, the gap is formed between the second extended portion 11 and second sealing lip 10 is not greater than the thickness of the weather strip 2 so as to prevent the displacement generated by the weather strip 2, thereby increasing the structural stability of the weather strip 2.

Furthermore, the U-shaped skeleton 6, engaging block 7, first sealing lip 8, first extended portion 9, second sealing lip 10 and second extended portion 11 are integrally formed together. By the integrally formation, the production efficiency can be improved, the production costs can be reduced and good economy can be achieved; and the number of parts is decreased and the assemble time is shortened so as to further reduce the production costs; moreover, the entire structure has good stability which is conductive to improving the connection reliability of the exterior beltline molding body and the door outer panel 3 and prolonging the service life of the whole exterior beltline molding body.

Preferably, in the present embodiment, the filler material layer 12 is made of EPDM foam material, which is a saturated polymer and low in price, has excellent characteristics of cushioning, shock absorption, sound absorption, sound insulation, sealing, resistance to weather, ozone resistance, corrosion resistance, heat resistance, stability and heat insulation and is capable of effectively reducing the noise phenomenon generated by the wind resistance so as to further improve the driving experience.

Preferably, in the present embodiment, both U-shaped skeleton and engaging block are made of a PP (Polypropylene) material which is excellent in heat resistance. By adopting the PP material, it can be avoided that since a TPE material is susceptible to the temperature to be deformed, steps and gaps are easily formed between the exterior beltline molding and a B pillar trim 1 especially in summer to result in poor sealing effect of the door. Further, the PP material has the advantages of high toughness, strong shock resistance and impact resistance, thereby improving the service life of the exterior beltline molding body.

The present disclosure also provides an automobile. Since it is provided with the seal structure of the exterior beltline molding described above, it has the benefit effects above, and details are not described herein again.

By providing a seal structure of a exterior beltline molding, disposed on the door outer panel and in fit with the window glass and the B pillar trim so as to seal the gap between the window glass and door outer panel, comprising the exterior beltline molding body and the weather strip engaged with the outer surface of the exterior beltline molding body, wherein the exterior beltline molding body comprises a U-shaped skeleton and an engaging block disposed at the end of the U-shaped skeleton, the engaging block is provided with an inversed hook portion and the door outer panel is configured with a waist hole for embedding the inversed hook portion, the accuracy for positioning the exterior beltline molding body is increased and meanwhile, the connection reliability between the exterior beltline molding body and door outer panel is also achieved, thereby effectively improving the sealing effect and appearance quality of the door; the seal structure of the exterior beltline molding for the automobile provided by the present disclosure has such advantages as simple structure, convenient manufacture and strong practicability and is conducive to standardization production and promotion.

## Claims

1. A seal structure of an exterior beltline molding for an automobile door, disposed on a door outer panel (3) and in fit with a window glass and a B pillar trim (1) so as to seal the gap between the window glass and door outer panel (3), comprising an exterior beltline molding body and an weather strip (2) engaged with the outer surface of the exterior beltline molding body, wherein the exterior beltline molding body comprises a U-shaped skeleton (6) and an engaging block (7) disposed at the end of the U-shaped skeleton (6), the engaging block (7) is provided with an inversed hook portion and the door outer panel (3) is configured with a waist hole for embedding the inversed hook portion, a filler material layer (12) is arranged between the B pillar trim (1) and the exterior beltline molding body, the exterior beltline molding body further comprises a first sealing lip (8) connected with the U-shaped skeleton (6) and the first sealing lip (8) is in fit connection with the B pillar trim (1), and the filler material layer (12) is arranged within an accommodating space formed by the B pillar trim (1), first sealing lip (8), U-shaped skeleton (6) and engaging block (7), **characterized in that** the U-shaped skeleton (6) is provided with a first extended portion (9) extending towards the first sealing lip (8) and a gap is formed between the first extended portion (9) and first sealing lip (8) for allowing the weather strip (2) to be embedded.

2. The seal structure of the exterior beltline molding for the automobile door according to claim 1, **characterized in that**, the exterior beltline molding body further comprises a second sealing lip (10) connected with the U-shaped skeleton (6) and the second sealing lip (10) is in fit connection with the door outer panel (3).

3. The seal structure of the exterior beltline molding for the automobile door according to claim 2, **characterized in that**, the U-shaped skeleton (6) is provided with a second extended portion (11) extending towards the second sealing lip (10) and a gap is formed between the second extended portion (11) and second sealing lip (10) for allowing the weather strip (2) to be embedded.

4. The seal structure of the exterior beltline molding for the automobile door according to the combination of claims 1, 2, and 3, **characterized in that**, the U-shaped skeleton (6), engaging block (7), first sealing lip (8), first extended portion (9), second sealing lip (10) and second extended portion (11) are integrally formed together.

5. The seal structure of the exterior beltline molding for the automobile door according to one of any claims 1 to 4, **characterized in that**, the filler material layer (12) is made of an EPDM (Ethylene Propylene Diene Monomer) foam material.

6. The seal structure of the exterior beltline molding for the automobile door according to any one of claims 1 to 5, **characterized in that**, both U-shaped skeleton (6) and engaging block (7) are made of a PP (Polypropylene) material.

7. An automobile comprising the seal structure of the exterior beltline molding for the automobile door according to any one of claims 1 to 6.

## Patentansprüche

1. Ein Siegelaufbau eines Außenformgusses für eine Kfz-Tür, der auf einer Außentafel (3) entsorgt und mit einem Fenster und einem B-Säulentrim (1) versehen ist, um die Lücke zwischen Fenster- und Türäußere Verkleidung (3) zu schließen, bestehend aus einem äußeren Spritzgusskörper und einem Wetterstreifen (2), der mit der Außenseite des Gabelformkörpers verbunden ist, wobei der Greifkörper U ein U umfasst Das Skelett (6) und ein einnehmender Block (7) ist mit einem invertierten Hakenanteil versehen, und die Außentafel (3) der Tür ist mit einem Taillenloch für die Einbettung des invertierten Hakenanteils eingerichtet, eine Füllstoffschicht (12) ist zwischen dem B-Säulentrim (1) und dem äußeren Gussgehäuse angeordnet, der äußere Gabelformkörper umfasst eine erste Lippendichtung (8), die mit dem U verbunden ist Skelett (6) und erste Sedimentlippe (8) sind in Verbindung mit dem B-Säulentrim (1) angeordnet, und die Füllstoffschicht (12) ist in dem Raum angeordnet, der durch den B-Säulentrim (1), die erste Segel (8), das U-förmige Skelett (6) und den einnehmenden Block (7) gebildet wird, wobei das U-Skelett (6) mit einem ersten eine ausgedehnte Portion (9), die sich bis zur ersten Dichtlippe (8) erstreckt, und eine Lücke zwischen der ersten verlängerten Portion (9) und der ersten Dichtlippe (8) gebildet wird, um die Einbindung des Wetterstreifens (2) zu ermöglichen.

2. Die Dichtstruktur des äußeren Gussformes für die Kfz-Tür nach Angabe 1, die sich darin auszeichnet, dass der äußere Gussformkörper zusätzlich eine zweite Dichtlippe (10) mit dem U-förmigen Skelett (6) und die zweite Dichtlippe (10) in Verbindung mit der Türäußere Abdeckung (3) umfasst.

3. Die Versiegelungsstruktur des äußeren Gussformes für die Kfz-Tür nach Angabe 2, die darin gekennzeichnet ist, dass das U-förmige Skelett (6) mit einem zweiten verlängerten Teil (11) bis zur zweiten Versiegelungslippe (10) und einer Lücke zwischen dem zweiten verlängerten Teil (11) und der zweiten Versiegelungslippe (10) zur Einbindung des Wetterstreifens (2) besteht.

4. Die Versiegelungsstruktur des äußeren Gussformguts für die Kfz-Tür nach der Angabe der Kombination der Angaben 1,2 und 3, die sich darin auszeichnet, sind das U-förmige Skelett (6), der Einlenkblock (7), die erste Dichtlippe (8), der erste erweiterte Teil (9), die zweite Dichtlippe (10) und der zweite erweiterte Teil (11) vollständig zusammengebildet.

5. Die Dichtstruktur des Fassadenausdrucks für die Kfz-Tür nach einem der Angaben 1 bis 4, die **dadurch gekennzeichnet ist, dass** die Füllstoffschicht (12) aus einem EPDM-Schaumstoff (Ethylen Propylen-Diene-Monomer) besteht.

6. Die Dichtstruktur des äußeren Gussformes für die Kfz-Tür nach einer der Angaben 1 bis 5, die sich darin auszeichnet, dass sowohl U-förmiges Skelett (6) als auch Einlegeblock (7) aus einem PP (Polypropylen)-Material bestehen.

7. Ein Automobil, das die Siegelstruktur des äußeren Gussformes für die Kfz-Tür nach den Angaben 1 bis 6 umfasst.

## Revendications

1. Structure de scellage d'un moulage extérieur de la ligne de démarcation d'une porte d'automobile, disposé sur un panneau extérieur de la porte (3) et ajusté avec un verre de la fenêtre et un garnissage de la colonne B (1) de façon à sceller l'écart entre le vitrage de la fenêtre et le panneau extérieur de la porte (3), comprenant un corps extérieur de moulage de la ligne de ceinture et une bande météorologique (2) engagée avec la surface extérieure du corps extérieur du corps extérieur de moulage de moulage de la ligne de moulage de moulage de la ligne de façade de façade extérieure le corps de moulage est constitué d'un squelette en forme de U (6) et d'un bloc de frottement (7) est muni d'une partie de crochet inversé et le panneau extérieur de la porte (3) est configuré avec un trou de taille pour l'incorporation de la partie de crochet inversé, une couche de matériau de remplissage (12) est disposée entre la partie de la colonne B (1) et le corps de moulage extérieur de la ligne de moulage de moulage de la ligne de courroie extérieure. la lèvre d'étanchéité (8) reliée au squelette en forme de U (6) et la première lèvre d'étanchéité (8) est en adéquation avec l'assiette de la colonne B (1), et la couche de matière d'étanchéité (12) est disposée dans l'espace d'accueil formé par l'assiette de la colonne B (1), la première lèvre d'étanchéité (8), le squelette en forme de U (6) et le bloc engageant (7)) est munie d'une première portion allongée (9) s'étendant vers la première lèvre d'étanchéité (8) et un écart est formé entre la première portion allongée (9) et la première lèvre d'étanchéité (8) pour permettre l'insertion de la bande d'étanchéité (2).

2. La structure de scellement de la moulure extérieure de la ligne de roche pour la porte d'automobile selon la revendication 1, caractérisée en ce sens que le corps extérieur de moulage de la ligne de roche comprend en outre une deuxième lèvre d'étanchéité (10) reliée au squelette en forme de U (6) et la deuxième lèvre d'étanchéité (10) est reliée au panneau extérieur de la porte (3).

3. La structure de scellement du moulage extérieur de la ligne de roche pour la porte d'automobile selon la revendication 2, caractérisée en ce sens que le squelette en forme de U (6) est muni d'une deuxième portion allongée (11) s'étendant vers la deuxième lèvre de fermeture (10) et qu'un écart est formé entre la deuxième portion allongée (11) et la deuxième lèvre de fermeture (10) pour permettre l'encastrage.

4. La structure de scellement du moulage extérieur de la ligne de courroie pour la porte d'automobile selon les combinaisons des revendications 1,2 et 3, caractérisées en ce sens que le squelette en forme de U (6), le bloc engageant (7), la première lèvre d'étanchéité (8), la première portion allongée (9), la deuxième lèvre d'étanchéité (10) et la deuxième partie allongée (11) sont entièrement formées.

5. La structure des scellés du moulage extérieur de la ceinture de sécurité pour la porte d'automobile selon l'une des revendications 1 à 4, caractérisée en ce sens que la couche de matériau de remplissage (12) est faite d'un matériau de mousse EPDM (Éthylène Propylène Diene Monomer).

6. La structure de scellement du moulage extérieur de la ligne de courroie pour la porte de l'automobile selon l'une des revendications 1 à 5, **caractérisée en ce que** le squelette en forme de U (6) et le bloc engageant (7) sont faits d'un matériau PP (Polypropylène).

7. Une automobile comprenant la structure de scellés du moulage extérieur de la ligne de courroie pour la porte d'automobile selon l'une des revendications 1 à 6.
